**Europäisches Patentamt**

**European Patent Office**

**Office européen des brevets**

(19)

(11) Veröffentlichungsnummer : **0 079 035**
**B1**

(12) **EUROPÄISCHE PATENTSCHRIFT**

(45) Veröffentlichungstag der Patentschrift :
16.04.86

(21) Anmeldenummer : **82110112.8**

(22) Anmeldetag : **03.11.82**

(51) Int. Cl.⁴ : **G 01 P  3/487, G 01 P  3/495**

(54) Tachosensor zur Gewinnung von geschwindigkeitsabhängigen elektrischen Signalen.

(30) Priorität : **06.11.81 DE 3144144**

(43) Veröffentlichungstag der Anmeldung :
**18.05.83 Patentblatt 83/20**

(45) Bekanntmachung des Hinweises auf die Patenterteilung : **16.04.86 Patentblatt 86/16**

(84) Benannte Vertragsstaaten :
**DE FR GB**

(56) Entgegenhaltungen :
**CH-A-  559 367**
**DE-B- 2 442 043**
**FR-A- 1 546 178**
**FR-A- 2 070 848**
**FR-A- 2 214 891**
**FR-A- 2 469 786**
**US-A- 3 521 159**

(73) Patentinhaber : **ROBERT BOSCH GMBH**
**Postfach 50**
**D-7000 Stuttgart 1 (DE)**

(72) Erfinder : **Riedel, Georg**
**Elimendinger Strasse 7c**
**D-7500 Karlsruhe 41 (DE)**
Erfinder : **Wolf, Konrad, Dipl.-Ing.**
**Fontaneweg 6**
**D-7519 Walzbachtal 2 (DE)**
Erfinder : **Zabler, Erich, Dr.-Ing.**
**Brunhildstrasse 11**
**D-7513 Stutensee (DE)**

Jouve, 18, rue St-Denis, 75001 Paris, France

**Beschreibung**

Stand der Technik

Die Erfindung geht aus von einem Tachosensor nach der Gattung des Hauptanspruchs.

Ein Tachosensor soll in Verbindung mit einem konventionellen, mechanischen Tachometer, wie er heute in Kraftfahrzeugen eingebaut ist, das Weg- bzw. Geschwindigkeitssignal in ein elektrisch verwertbares Signal umwandeln, welches beispielsweise als Eingangssignal für einen nachzurüstenden Bordcomputer, für eine Kraftstoffverbrauchsanzeige oder ähnliches benötigt wird. Es sind induktive Sensoren bekannt, die eine Spule aufweisen, die mit einer Eisenschraube auf die Rückseite des Tachometers geschraubt wird und von dem Streufeld des oder der rotierenden Tachomagneten beeinflußt wird. Es wird in der Spule eine bezüglich Frequenz und Amplitude geschwindigkeitsproportionale bzw. tachowellendrehzahlproportionale Impulsspannung induziert, die verstärkt als elektrisches Tachosignal verwandt werden kann. Diese bekannten Tachosensoren haben aber den Nachteil, daß sie nur oberhalb einer bestimmten Fahrgeschwindigkeit störsicher arbeiten, da bei geringen Fahrgeschwindigkeiten das Nutz- zu Störverhältnis zu gering ist.

Eine Einrichtung mit den eben geschilderten Nachteilen ist in der DE-A-24 42 043 offenbart. Dort ist ein Wirbelstromtachometer zum Erzeugen eines geschwindigkeitsabhängigen elektrischen Signals vorgesehen, der gemäß der einzigen Figur der Schrift unter anderem einen mechanischen Tachometer umfaßt, der mittels zweier Schrauben befestigt ist. Mit Hilfe einer der beiden Schrauben ist dabei eine Induktionsspule ebenfalls mit dem mechanischen Tachometer verbunden, und zwar derart, daß sich die Induktionsspule außerhalb der Schraube befindet. Dies hat zur Folge, daß die bekannte Einrichtung, wie schon ausgeführt wurde, nur oberhalb einer bestimmten Fahrgeschwindigkeit störsicher arbeiten kann.

Aus der FR-A-22 14 891 ist eine Möglichkeit bekannt, mit deren Hilfe eine Spule mit einem Kern in eine Schraube eingelassen werden kann. Weiter ist in der FR-A-24 69 786 ein Gegenstand offenbart, bei dem um einen aus mehreren Blechen bestehenden Kern eine Spule gewickelt ist. Bei beiden genannten Schriften ist jedoch kein Hinweis dahingehend zu finden, die offenbarten Gegenstände im Zusammenhang mit einem mechanischen Tachometer zu verwenden.

Schließlich sind induktive Sensoren oder mit Reedkontakten bestückte Sensoren bekannt, die mechanisch angetrieben werden, so daß die Tachowelle mechanisch aufgetrennt werden muß. Diese Art von Sensoren eignen sich daher nicht zur Nachrüstung insbesondere durch einen Laien.

Vorteile der Erfindung

Die Aufgabe der Erfindung besteht darin, einen Tachosensor zur Gewinnung von geschwindigkeitsabhängigen Signalen in Verbindung mit einem mechanischen Tachometer anzugeben, der bis hinunter zu einer Tachowellendrehzahl von O Umdrehungen pro Minute arbeitet. Dieser Tachosensor soll dabei ohne einen Eingriff in den Tachometer vornehmen zu müssen, nachrüstbar sein.

Diese Aufgabe wird mit Hilfe der kennzeichnenden Merkmale des Hauptanspruchs gelöst.

Bei einer besonders vorteilhaften Ausgestaltung des erfindungsgemäßen Tachosensors werden zwei Spulen in räumlich getrennte Weise auf einem Kern angeordnet, wobei die Spulen Teil eines RL-Multivibrators sind.

Durch die in den Unteransprüchen angegebenen Merkmale sind weitere vorteilhafte Weiterbildungen und Verbesserungen des erfindungsgemäßen Tachosensors möglich. Die vorgeschlagenen Auswerteschaltungen liefern dabei exakte Signale und sind einfach und preisgünstig herzustellen.

Zeichnung

Der erfindungsgemäße Tachosensor ist in der Zeichnung dargestellt und wird in der nachfolgenden Beschreibung näher erläutert. Es zeigen Figur 1 eine auf einen flachen Kern gewickelte Spule, die in einer Schraube eingelassen ist, Figur 2 eine erste Auswerteschaltung, Figur 3 eine zweite Auswerteschaltung, Figur 4 eine dritte Auswerteschaltung und Figur 5 eine vierte Auswerteschaltung.

Beschreibung der Ausführungsbeispiele

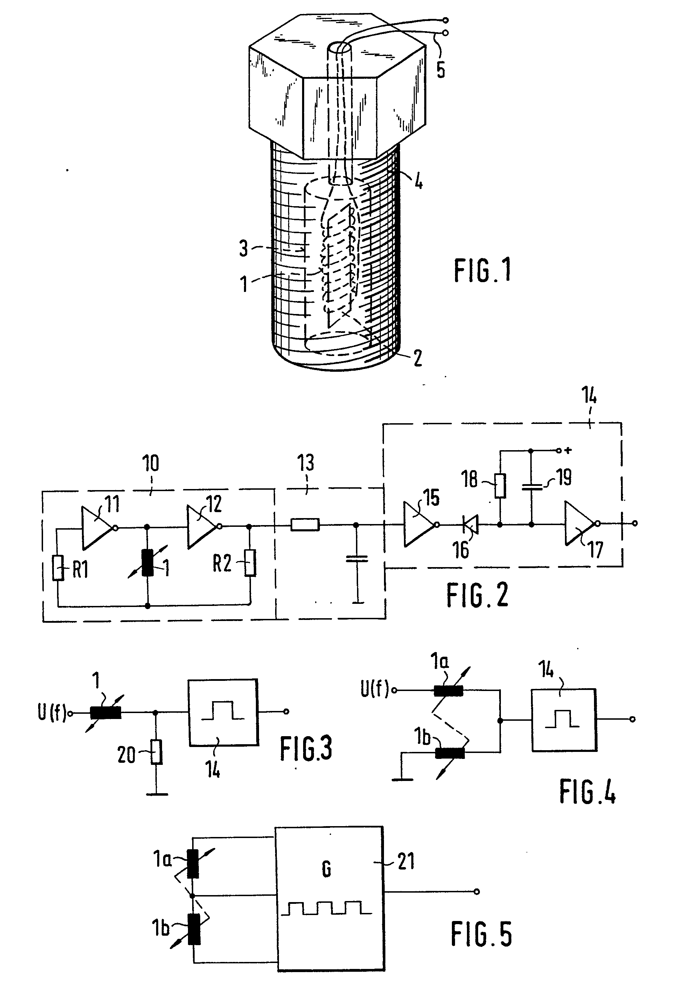

In Figur 1 ist eine flache Spule, die 10 bis einige 100 Windungen aufweisen kann, auf einem Kern 2 angeordnet. Der Kern besteht aus einem oder mehreren Blechen aus weichmagnetischem Material, die eine Dicke von kleiner als 0,1 mm aufweisen. Die Spule 1 mit dem Kern 2 ist in die Bohrung 3 einer Schraube 4 eingelassen, wobei die Zuleitungen 5 zur Spule 1 aus der Schraube 4, die aus nichtmagnetischem Material wie Messing oder Kunststoff besteht, herausführen. Die Anordnung nach Figur 1 wird in die Rückseite eines Tachometers eingeschraubt. Diese Einbauart ist besonders für Tachometer geeignet, deren magnetische Feldstärkevariation bei einer Anbaustelle außerhalb des Tachometers zur Aussteuerung des Tachosensors nicht ausreichen sollte. An die Zuleitungen 5 ist eine Auswerteschaltung entsprechend den Figuren 2 bis 5 angeschlossen.

2

Bei einer weiteren nicht dargestellten Anordnung kann die Spule 1 mit dem Kern 2 und mit der Auswerteschaltung, die sich auf einem Träger befindet, mittels einer am Tachometer vorhandenen Schraube auf dessen Rückseite, die als Befestigungsblech zum Amaturenbrett dient, befestigt werden.

Die in den mechanischen Tachometern vorhandenen rotierenden Tachomagnete erzeugen ein Magnetfeld. Der erfindungsgemäße Tachosensor wird durch seine Anbauweise in das Streufeld der rotierenden Tachomagneten gebracht. In Abhängigkeit vom Magnetfeld ändert sich die Permeabilität des Kerns 2 und damit ändert sich die Induktivität der Spule. Die Änderung der Induktivität wird in der nachgeschalteten Auswerteschaltung ausgenutzt.

In Figur 2 ist die Spule 1 frequenzbestimmendes Teil eines RL-Relaxationsoszillators 10. Ein Widerstand R1 ist mit seinem einen Ende mit der Spule 1 verbunden und führt mit seinem anderen Ende auf den Eingang eines ersten Inverters 11. Der Ausgang des ersten Inverters 11 ist einerseits mit dem zweiten Ende der Spule 1 und mit dem Eingang eines zweiten Inverters 12 verbunden. An dessen Ausgang liegt ein Widerstand R2, dessen anderes Ende mit der Spule 1 verbunden ist. Der Relaxationsoszillator 10 liefert je nach magnetischer Aussteuerung an seinem Ausgang z. B. eine rechteckförmige, frequenzmodulierte Ausgangsspannung. Die Weg- bzw. Geschwindigkeitsinformation, die der Tachowellendrehzahl entspricht, liegt in der Häufigkeit der Über- bzw. Unterschreitungen einer bestimmten Frequenzschwelle dieser Ausgangsspannung, z. B.

$$f_{grenz} \approx 0.5 \cdot (f_{Min} + f_{Max}),$$

wobei $f_{Min}$ und $f_{Max}$ die minimale bzw. die maximale Frequenz der Ausgangsspannung ist. Dem Relaxationsoszillator 10 ist ein als Tiefpaß 13 ausgebildetes Filter nachgeschaltet, das auf den Eingang einer Impulsformerstufe 14 führt. Tiefpaß 13 und Impulsformerstufe 14 bilden einen Frequenzdiskriminator. Der Tiefpaß 13 ist mit dem Eingang eines vierten Inverters 15 verbunden dessen Ausgang an die Kathode einer Diode 16 angeschlossen ist. Die Anode der Diode 16 führt auf den Eingang eines vierten Inverters 17 und ist außerdem über eine Parallelschaltung von einem Widerstand 18 und einem Kondensator 19 mit dem positiven Pol der nicht dargestellten Stromversorgungseinrichtung verbunden. Am Ausgang des Tiefpasses 13 liegt eine Spannung an, deren Amplitude jeweils von der Frequenz des Ausgangssignals des Relaxationsoszillators abhängt. Die Impulsformerstufe 14 liefert dann eine Rechteckspannung, deren Frequenz proportional zur Geschwindigkeit des Fahrzeuges bzw. proportional zur Tachowellendrehzahl ist.

Falls bereits eine hochfrequente Spannung (ca. 10 kHz bis 10 MHz) an Bord des Kraftfahrzeuges zur Verfügung steht, z. B. die Taktfrequenz für einen Mikroprozessor, kann diese Spannung entsprechend Figur 3 der Spule 1 zugeführt werden, die einerseits über einen Widerstand 20 mit Masse verbunden ist und andererseits an die Impulsformerstufe 14 angeschlossen ist. Bei der Auswerteschaltung nach Figur 3 wird die Impedanzvariation der Spule in Verbindung mit dem Widerstand 20 ausgenutzt. (Tiefpaßfilter).

Um Temperatureffekte und ähnliche Effekte ausschließen zu können, kann eine Differentialauswertung vorgesehen werden. Dazu werden zwei räumlich getrennte Spulen auf den Kern 2 gewickelt und entsprechend den Figuren 4 und 5 beschaltet. Ebenso wie für die Schaltung aus Figur 3 muß für die Schaltung entsprechend Figur 4 eine hochfrequente Spannung zu Verfügung stehen, die die Reihenschaltung der Spulen 1a und 1b speist (Spannungsteiler). Der Verbindungspunkt zwischen den zwei Spulen 1a und 1b ist mit der Impulsformerschaltung 14 entsprechend Figur 3 und Figur 2 verbunden.

Eine selbstschwingende Differentialschaltung ist in Figur 5 gezeigt, bei der die beiden Enden der Spulen 1a, 1b und ihr Verbindungspunkt mit einem Multivibrator 21 mit Widerständen als RL-Zeitglieder verbunden sind. Am Ausgang liegt dann eine Rechteckspannung an, bei der die Impulsdauer und die Pausendauer entsprechend der Induktivitäten der einzelnen Spulen variieren.

**Patentansprüche**

1. Tachosensor zur Gewinnung von geschwindigkeitsabhängigen Signalen in Verbindung mit einem mechanischen Tachometer mit mindestens einer Spule (1), die vom magnetischen Feld mindestens eines Tachomagneten beeinflußt wird, dadurch gekennzeichnet, daß die Wicklung (1) auf mindestens einem dünnen, den Kern bildenden Blech (2) aus weichmagnetischem Material angeordnet ist, daß die Spule (1) mit dem Kern (2) in eine Schraube (4) aus nichtmagnetischem Material eingelassen ist, die in den mechanischen Tachometer eingeschraubt werden kann, und daß eine Auswerteschaltung die Änderung der Induktivität der Spule (1) berücksichtigt.

2. Tachosensor nach Anspruch 1, dadurch gekennzeichnet, daß er auf der Rückseite des mechanischen Tachometers befestigbar ist.

3. Tachosensor nach einem der Ansprüche 1 bis 2, dadurch gekennzeichnet, daß die Spule (1) Bestandteil eines RL-Relaxationsoszillators (10) ist.

4. Tachosensor nach Anspruch 3, dadurch gekennzeichnet, daß dem Relaxationsoszillator (10) ein Frequenzdiskriminator (13, 14) nachgeschaltet ist.

5. Tachosensor nach einem der Ansprüche 1 oder 2, dadurch gekennzeichnet, daß eine hochfrequente Spannung an die Reihenschaltung der Spule (1) und eines Widerstandes (20) angelegt wird, wobei der Verbindungspunkt zwischen Spule (1) und Widerstand (20) mit einer Impulsformerstufe (14) verbunden ist.

6. Tachosensor nach Anspruch 1, dadurch gekennzeichnet, daß zwei Spulen (1a, 1b) in räumlich getrennter Weise auf dem Kern (2) angeordnet sind.

7. Tachosensor nach Anspruch 6, dadurch gekennzeichnet, daß die Spulen (1a, 1b) Teil eines RL-Multivibrators (21) sind.

8. Tachosensor nach Anspruch 6, dadurch gekennzeichnet, daß eine hochfrequente Spannung an die Reihenschaltung der zwei Spulen (1a, 1b) angelegt wird, wobei der Verbindungspunkt zwischen den Spulen (1a, 1b) mit einer Impulsformerstufe (14) verbunden ist.

**Claims**

1. Tachosensor for obtaining speed-dependent signals in conjunction with a mechanical tachometer, having at least one coil (1) which is influenced by the magnetic field of at least one tachomagnet, characterized in that the winding (1) is arranged on at least one thin plate (2) of soft magnetic material, which forms the core, that the coil (1), together with the core (2), is inserted into a screw (4) of non-magnetic material which can be screwed into the mechanical tachometer and that an evaluating circuit takes account of the change in inductance of the coil (1).

2. Tachosensor according to Claim 1, characterized in that it can be mounted on the back of the mechanical tachometer.

3. Tachosensor according to one of Claims 1 to 2, characterized in that the coil (1) is a component of an RL relaxation oscillator (10).

4. Tachosensor according to Claim 3, characterized in that the relaxation oscillator (1) is followed by a frequency discriminator (13, 14).

5. Tachosensor according to one of Claims 1 or 2, characterized in that a high-frequency voltage is applied to the series circuit of the coil (1) and a resistor (20), the junction between the coil (1) and resistor (20) being connected to a pulse shaping stage (14).

6. Tachosensor according to Claim 1, characterized in that two coils (1a, 1b) are arranged in spatially separated manner on the core (2).

7. Tachosensor according to Claim 6, characterized in that the coils (1a, 1b) are part of an RL multivibrator (21).

8. Tachosensor according to Claim 6, characterized in that a high-frequency voltage is applied to the series circuit of the two coils (1a, 1b), the junction between the coils (1a, 1b) being connected to a pulse shaping stage (14).

**Revendications**

1. Détecteur tachymétrique pour générer des signaux dépendant de la vitesse en liaison avec un tachymètre mécanique ayant au moins une bobine (1) qui est influencée par le champ magnétique d'au moins un aimant de tachymètre, caractérisé en ce que l'enroulement (1) est prévu sur au moins une tôle mince (2) formant le noyau, en un matériau à aimantation douce, en ce que la bobine (1) et le noyau (2) sont logés dans une vis (4) en un matériau non magnétique qui peut être vissée dans le tachymètre mécanique et en ce qu'un circuit d'exploitation tient compte du changement d'inductance de la bobine (1).

2. Détecteur tachymétrique selon la revendication 1, caractérisé en ce qu'il peut se fixer au dos du tachymètre mécanique.

3. Détecteur tachymétrique selon l'une des revendications 1 à 2, caractérisé en ce que la bobine (1) fait partie d'un oscillateur à relaxation (RL 10).

4. Détecteur tachymétrique selon la revendication 3, caractérisé en ce qu'un discriminateur de fréquence (13, 14) est prévu en aval de l'oscillateur de relaxation (10).

5. Détecteur tachymétrique selon l'une des revendications 1 et 2, caractérisé en ce qu'on applique une tension de haute fréquence au montage en série de la bobine (1) et d'une résistance (20), le point de jonction de la bobine (1) et de la résistance (20) étant relié à un étage-formeur d'impulsions (14).

6. Détecteur tachymétrique selon la revendication 1, caractérisé en ce que deux bobines (1a, 1b) sont prévues sur le noyau (2) en étant séparées dans l'espace.

7. Détecteur tachymétrique selon la revendication 6, caractérisé en ce que les bobines (1a, 1b) font partie d'un multivibrateur RL (21).

8. Détecteur tachymétrique selon la revendication 6, caractérisé en ce qu'une tension à haute fréquence est appliquée au montage en série des deux bobines (1a, 1b), le point de jonction entre les bobines (1a, 1b) étant relié à un étage-formeur d'impulsions (14).

FIG.1

FIG.2

FIG.3

FIG.4

FIG.5

1